# EUROPEAN PATENT SPECIFICATION

(11) **EP 3 922 413 B1**
(45) Date of publication and mention of the grant of the patent: **21.08.2024**
(21) Application number: 21182655.7
(22) Date of filing: 01.07.2019
(51) Int. Cl.: B25F 5/00

(54) **ELECTRIC POWER TOOL ARRANGEMENT**
ELEKTROWERKZEUGANORDNUNG
AGENCEMENT D'OUTIL ÉLECTRIQUE

(43) Date of publication of application: 15.12.2021
(62) Divisional of application: 19183644.4
(73) Proprietor: Valentini, Guido, 20122 Milano (IT)
(72) Inventor: Valentini, Guido, 20122 Milano (IT)
(74) Representative: Wörz, Volker Alfred

(56) References cited:
- EP-A1- 2 712 713
- WO-A2-2013/137422
- US-A1- 2005 194 928
- US-A1- 2005 280 393
- US-A1- 2012 326 670

## Description

The present invention refers to an electric power tool arrangement comprising an electric power tool, in particular to a hand-held and/or hand-guided battery-operated power tool, e.g. a polishing or sanding tool, comprising
- a housing,
- an electric motor located inside the housing,
- a working element protruding from the housing,
- wherein the electric motor is connected to the working element in order to impose a rotational and/or an eccentric working movement to the working element, and
- two or more battery units adapted to provide electric energy to the electric motor for its operation.

One of the battery units is an external battery unit provided separately from the rest of the electric power tool and releasably attachable and electrically connectable to the rest of the electric power tool, and the at least one other battery unit is an internal battery unit fixedly located inside the housing and electrically connected to the rest of the electric power tool.

The electric power tool arrangement further comprises a voltage converter unit provided separately from the rest of the electric power tool and releasably attachable and electrically connectable to the rest of the electric power tool in place of the external battery unit, the voltage converter unit being adapted to be connected to a mains power supply and to convert a mains voltage provided by the mains power supply to a voltage of the at least one internal battery unit.

An electric power tool arrangement of the above-identified kind, and according to the preamble of claim 1, is known from US 2005/ 280 393 A1. A similar electric power tool arrangement is known from WO 2013/ 137 422 A2, and from US 2005/194928 A1.

Hand-held and/or hand guided electric power tools comprising two separate battery units are known in the prior art. For example, WO 2014/119 133 A1 describes an orbital sander comprising a housing, an electric motor and two external battery units, which are externally attached to the housing of the power tool. The idea is to use two cheaper low-voltage battery units and to connect them in series in order to obtain a higher voltage for operating the electric motor. For example, an electric motor having an operating voltage of 36 V can be powered by two cheaper battery units having a voltage of 18 V each if they are coupled in series.

On the one hand, in conventional hand-held and/or hand-guided power tools, the technical development in recent years has led to increasingly smaller dimensions and higher efficiency of mechanical and electric components of the power tool. The components of the power tool comprise, for example, electric motors, electric control units and gear arrangements. The higher efficiency of these components results in less waste heat requiring less and/or smaller components for removing the waste heat and cooling the components. On the other hand, the size of the housing of power tools cannot be unduly reduced because a certain minimum size of the housing is required in order to allow an ergonomic, convenient and safe handling and/or use of the power tool by a user. This results in an increasing amount of excess unused space in the housing of modern electric power tools.

Therefore, it is an object of the present invention to provide for an advanced electric power tool arrangement overcoming the above-mentioned deficiencies and for an efficient use of the otherwise unused space in the housing of the power tool.

In order to achieve this object, an electric power tool arrangement comprising the features of claim 1 is suggested. In particular, it is suggested that in the electric power tool arrangement of the above identified kind after attachment and electric contacting of the voltage converter unit to the rest of the electric power tool the voltage converter unit provides electric energy to the electric motor during its operation, and the voltage converter unit is adapted to recharge the at least one internal battery unit.

The electric power tool arrangement according to the invention uses the previously unused space in conventional battery-operated power tools for at least one additional internal battery, which can provide additional electric energy for operating the electric motor for a longer period of time. The period of utilization of power tools without having to recharge the battery is a crucial factor with battery-operated power tools like polishing or sanding tools, because they require a relatively large amount of power (high currents) for achieving the desired work during the intended use of the power tool. Therefore, the at least one additional internal battery unit will provide for a longer period of continuous utilization of the power tool between two charging cycles of the batteries and for an operation of the power tool offering the desired rather high currents over a longer period of time. This significantly enhances usability of the tool.

Simply providing for a larger external battery unit and filling the unused space in the housing of the power tool with the larger external battery unit would result in too large and heavy external battery units which are difficult to handle for the user during extraction from the housing of the power tool, recharging in an external charger, and re-insertion into the housing. Furthermore, conventional smaller external battery units could no longer be used and new larger battery units would have to be developed and manufactured by the power tool or battery manufacturer and would have to be bought and stored on site by the user of the power tool for insertion into the power tool when needed.

In contrast thereto, the present invention allows the use of conventional smaller external battery units which have been previously used by the user for similar or other battery-operated electric power tools. The user can continue to use the external battery units he already has. At the same time, the unused space in the housing is sensibly and efficiently used by the at least one additional internal battery unit.

The external battery unit may be attached to the outside surface of the housing and electrically contacted with the rest of the power tool by contact elements provided on the outside surface of the housing. Other ways of attaching and contacting the external battery unit are conceivable, too. For example, according to a preferred embodiment of the invention, it is suggested that the housing comprises a receptacle accessible from outside and adapted to receive at least part of the external battery unit. Preferably, the form and the dimensions of the receptacle are adapted to the form and dimensions of the to be inserted part of the external battery unit. That part of the external battery unit, which is not inserted into the receptacle, preferably varies in form and/or dimensions in respect to the to be inserted part. It is particularly preferred that the not to be inserted part of the external battery unit resumes the form and dimensions of the tool housing surrounding an insertion opening of the receptacle, thereby providing for a virtually continuous transition between the tool housing and the not to be inserted part of the external battery unit resulting in a pleasing external appearance of the power tool.

The receptacle is preferably provided on a rear part of the housing of the power tool with the insertion opening facing rearwards. A longitudinal extension of the receptacle preferably extends parallel to a longitudinal extension of the tool housing. It is suggested that a larger part of the external battery unit is inserted into the receptacle whereas a smaller part of the external battery unit is not inserted and remains visible from outside. It is further suggested that the receptacle and the external battery unit are provided with respective guiding means, which cooperate with each other for facilitating the introduction of the external battery unit into the insertion opening of the receptacle and/or the insertion and extraction of the external battery unit into and from the receptacle. The receptacle and the external battery unit may also be provided with corresponding coding elements which cooperate with each other for permitting introduction of the external battery unit into the insertion opening and insertion into the receptacle only in one specific orientation of the battery unit. This provides for a safe and secure attachment and contact of the external battery unit with the rest of the power tool. The external battery unit may be electrically contacted with respective contact elements of the rest of the power tool before, during or after the insertion of the external battery unit into the receptacle.

According to another preferred embodiment of the present invention, it is suggested that the receptacle comprises fastening elements for releasably attaching the external battery unit to the rest of the power tool after insertion of at least part of the external battery unit into the receptacle, and wherein the receptacle further comprises electric contact elements for electrically contacting the external battery unit to the rest of the power tool before, during or after insertion of at least part of the external battery unit into the receptacle.

The external battery unit is provided with corresponding fastening elements adapted for cooperating with the fastening elements of the receptacle at least during the end of the insertion process thereby holding and securing the external battery unit in the receptacle and preventing the battery unit from unintentionally falling out of the receptacle during intended use of the power tool. The fastening elements of the receptacle and the external battery unit may be embodied as resilient hooks cooperating with recesses or holes; as magnetic elements cooperating with ferromagnetic elements; as components of a bayonet fastening arrangement; or in any other way.

The external battery unit is also provided with corresponding electric contact elements adapted for cooperating with the electric contact elements of the receptacle at least during the end of the insertion process for electrically contacting the external battery unit with the electronics of the rest of the electric power tool. The contact elements of the receptacle and the external battery unit may be embodied as a plug and socket arrangement; as resilient electric contacts cooperating with conductive tracks extending on side walls of the receptacle along the insertion direction; as resilient electric contacts cooperating with other electric contacts located at a bottom wall of the receptacle; or in any other way.

It is particularly preferable if the electric contact elements are adapted to automatically establish an electric contact between the external battery unit and the rest of the power tool upon complete insertion of at least part of the external battery unit into the receptacle. It is further preferred that the fastening elements are adapted to automatically interact with each other upon complete insertion of at least part of the external battery unit into the receptacle. This has the advantage that the external battery unit can be releasably attached and electrically connected to the rest of the power tool in a single insertion action. No additional action is required for releasably attaching and/or electrically contacting the external battery unit to the rest of the electric power tool.

According to another preferred embodiment of the invention, after attachment and electric contacting of the external battery unit to the rest of the electric power tool all battery units (internal and external) are adapted to contemporarily provide electric energy to the electric motor for its operation during the intended use of the power tool. Preferably, all battery units have the same voltage, in particular corresponding to the operation voltage of the electric motor. Hence, the external and internal battery units and the electric motor are preferably connected in parallel to each other so that the available total current for operating the electric motor is a sum total of the current of each of the battery units. With other words, the external and internal battery units act as if they were a single battery unit having a total voltage corresponding to the voltage of each of the battery units and providing a current corresponding to the sum total of the currents of each of the battery units.

The present invention is particularly advantageous if the electric power tool is embodied as a polisher or sander, in particular as an angular polisher or sander. In that case the working element is usually a backing pad performing a rotary and/or an orbital working movement. Preferably, the backing pad has a circular form and performs a purely rotational, a random orbital or a roto-orbital (gear driven) working movement. A sheet-like polishing or sanding member is attached in a releasable manner to the bottom surface of the backing pad, preferably by means of a hook-and-loop-fastener (Velcro^{®}) arrangement. To this end, the bottom surface of the backing pad may be provided with a first layer of Velcro^{®}-material. The sheet-like polishing member comprises a sponge or foam pad, a sheet of lambs' or synthetic wool, a sheet of microfibre, or the like. The sheet-like sanding member comprises a sheet of paper or fabric with abrasive grits attached thereto, or the like. The top surface of the sheet-like polishing or sanding member may be provided with a second layer of Velcro^{®}-material.

Polishers and sanders are usually gripped with both hands by a user and, therefore, have a rather large housing, which cannot be sensibly reduced in size without affecting proper usability of the polisher or sander. Usually, a user grips a rear part of the housing with a first hand, possibly with an on/off-switch of the polisher or sander being actuated by the index finger or the palm of that hand and a rotary switch or potentiometer for adjusting the speed of the polisher or sander being actuated a finger or the thumb of that hand. Usually, the user lays a second hand on a front part of the housing above the backing pad in order to apply enough working pressure onto the backing pad and the sheet-like polishing or sanding member attached thereto. The direction of the pressure is preferably perpendicular to the extension of the backing pad and parallel to a rotational axis of the backing pad. A good usability of the polisher or sander requires a certain distance between the two hands gripping the housing and, hence, between the rear part and the front part of the housing. Therefore, modern polishers or sanders have particularly large unused space in the housing, which according to the invention is sensibly used for arranging at least one additional internal battery unit therein.

The connection between the electric motor and the working element can be direct, wherein the motor shaft is directly coupled to the working element, which rotates at the speed of the motor. Alternatively, the connection can be indirect with certain components functionally located between the motor shaft and a driving shaft to which the working element is connected. The components can comprise a clutch, an overload protection (permitting free rotation of the motor shaft in respect to the driving shaft in case the force/load applied to the working element during intended use of the power tool exceeds a certain value), a parallel, bevel or planetary gear arrangement, an eccentric element for making the working element perform a random orbital working movement, or the like. Preferably, the connection between the electric motor and the working element is indirect and of the mechanical and/or magnetic type. In particular, it is suggested that a mechanical gear arrangement and/or a magnetic gear arrangement is functionally located in the connection between the electric motor and the working element.

The electric power tool cannot only be operated by the electric energy originating from the battery units but also by electric energy originating from a mains power supply. This has the advantage that the electric power tool can be operated for an almost infinite amount of time. Use of the voltage converter unit instead of the external battery unit is particularly advantageous in places with sufficient mains power supply sockets and in situations where large surfaces have to be worked, for example large boat or airplane hulls, or large surfaces of a vehicle body, for example the engine bonnet, the trunk lid, the roof or the doors. During use of the voltage converter unit the removed external battery unit may be recharged, for example in an external battery charger.

Preferably, the form and the dimensions of the voltage converter unit are adapted to the form and dimensions of the receptacle so that at least part of the voltage converter unit may be inserted into the receptacle, releasably attached to the housing and electrically contacted with the rest of the electric power tool. That part of the voltage converter unit, which is not inserted into the receptacle, preferably varies in form and/or dimensions in respect to the to be inserted part. It is particularly preferred that the not to be inserted part of the voltage converter unit resumes the form and dimensions of the tool housing surrounding an insertion opening of the receptacle, thereby providing for a virtually continuous transition between the tool housing and the not to be inserted part of the voltage converter unit.

It is suggested that the receptacle and the voltage converter unit are provided with respective guiding means, which cooperate with each other for facilitating the introduction of the voltage converter unit into the insertion opening of the receptacle and/or the insertion and extraction of the voltage converter unit into and from the receptacle. The receptacle and the voltage converter unit may also be provided with corresponding coding elements which cooperate with each other for permitting introduction of the voltage converter unit into the insertion opening and insertion into the receptacle only in one specific orientation. The voltage converter unit may be electrically contacted with respective contact elements of the rest of the power tool before, during or after the insertion of the voltage converter unit into the receptacle.

According to another preferred embodiment of the present invention, it is suggested that the receptacle comprises fastening elements for releasably attaching the voltage converter unit to the rest of the power tool after insertion of at least part of the voltage converter unit into the receptacle, and wherein the receptacle further comprises electric contacts elements for electrically contacting the voltage converter unit to the rest of the power tool after insertion of at least part of the voltage converter unit into the receptacle. It is suggested that the same fastening elements of the receptacle are used for releasable attachment of the external battery unit and the voltage converter unit and that the same electric contacts of the receptacle are used for electrically contacting the external battery unit and the voltage converter unit to the rest of the power tool.

The voltage converter unit is provided with corresponding fastening elements adapted for cooperating with the fastening elements of the receptacle at least during the end of the insertion process for holding and securing the voltage converter unit in the receptacle and for preventing the voltage converter unit from unintentionally falling out of the receptacle. The fastening elements of the receptacle and the voltage converter unit may be embodied as resilient hooks cooperating with recesses or holes; as magnetic elements cooperating with ferromagnetic elements; as components of a bayonet fastening arrangement; or in any other way.

The voltage converter unit is also provided with corresponding electric contact elements adapted for cooperating with the electric contact elements of the receptacle at least during the end of the insertion process for electrically contacting the voltage converter unit with the electronics of the rest of the electric power tool. The contact elements of the receptacle and the voltage converter unit may be embodied as a plug and socket arrangement; as resilient electric contacts cooperating with conductive tracks extending on side walls of the receptacle along the insertion direction; as resilient electric contacts cooperating with electric contacts located at a bottom wall of the receptacle; or in any other way.

It is particularly preferable if the electric contact elements are adapted to automatically establish an electric contact between the voltage converter unit and the rest of the power tool upon complete insertion of at least part of the voltage converter unit into the receptacle. It is further preferred that the fastening elements are adapted to automatically interact with each other upon complete insertion of at least part of the voltage converter unit into the receptacle. This has the advantage that the voltage converter unit can be releasably attached and electrically connected to the rest of the power tool in a single insertion action. No additional action is required for releasably attaching and/or electrically contacting the voltage converter unit to the rest of the electric power tool.

After attachment and electric contacting of the voltage converter unit to the rest of the electric power tool, the electric motor of the electric power tool is operated with the electric energy originating from the voltage converter unit. This can be but is not necessarily effected contemporarily with the recharging of the internal battery unit.

After attachment and electric contacting of the voltage converter unit to the rest of the electric power tool (and obviously after connection of the voltage converter unit to the mains power supply) the voltage converter unit is adapted to recharge the at least one internal battery unit. This has the advantage that the electric power tool does not have to be attached to a separate external battery charger for recharging the internal battery unit. The internal battery unit is automatically recharged by the voltage converter unit after its attachment and electric connection to the rest of the power tool, preferably but not necessarily during the intended use of the power tool with the voltage converter unit. The recharging process can be controlled by an appropriate battery charging management unit. The battery charging management unit is preferably implemented in the electronics of the power tool, realized for example by a microcontroller with appropriate software being processed by the microcontroller. An overcharging and a possible damage of the internal battery unit can be avoided by means of the battery charging management unit. Furthermore, the recharging process can be controlled and optimized such that it is particularly gentle and protective for the internal battery unit thereby assuring a long lasting life of the internal battery unit.

It is further suggested that after attachment and electric contacting of the voltage converter unit to the rest of the electric power tool the voltage converter unit is adapted to exclusively provide electric energy to the electric motor for its operation while the at least one internal battery unit provides no electric energy to the electric motor. Hence, the operation of the electric motor is exclusively achieved through the voltage converter unit. During operation of the electric motor exclusively by the voltage converter unit the at least one internal battery unit is if at all only recharged. After being fully charged, the internal battery unit may be brought into an idle state in which it is neither charged nor does it supply electric energy for the operation of the electric motor.

The power tool may be provided with one or more switching devices which are operated differently depending on whether the voltage converter unit or the external battery unit is inserted into the receptacle of the tool housing. For example, one or more switching devices may be opened upon insertion of the voltage converter unit and closed upon insertion of the external battery unit. Similarly, one or more switching devices may be closed upon insertion of the voltage converter unit and opened upon insertion of the external battery unit. Each of the switching devices may comprise one or more of a mechanical switch, a magnetic switch, or an electric switch. A mechanical switch may be operated by a mechanical part of the voltage converter unit and/or the external battery unit when it is inserted into the receptacle. A magnetic switch may be operated by a permanent magnet making part of the voltage converter unit and/or the external battery unit when it is inserted into the receptacle. An electric switch may be may be operated by means of an electric control signal generated when the voltage converter unit and/or the external battery unit is inserted into the receptacle. The switches may be embodied as semiconductor devices, e.g. a transistor or the like.

Further features and advantages of the present invention are described hereinafter with reference to the accompanying drawings. These show:
- Figure 1: an electric power tool in the form of a polisher in a first operational state in a partly sectional view;
- Figure 2: an external battery unit of the electric power tool of figure 1 in a sectional view;
- Figure 3: the electric power tool of figure 1 without the external battery unit in a partly sectional view;
- Figure 4: the electric power tool of figure 1 in a second operational state in a partly sectional view;
- Figure 5: a voltage converter unit of the electric power tool of figure 4 in a sectional view;
- Figure 6: an electric power tool arrangement according to the present invention in the form of a polisher in a perspective view;
- Figure 7: the electric power tool of figure 1 in the first operational state in a schematic sectional view;
- Figure 8: the electric power tool of figure 4 in the second operational state in a schematic sectional view; and

- Figure 9: a flow chart representing a method for operating the power tool according to the present invention.

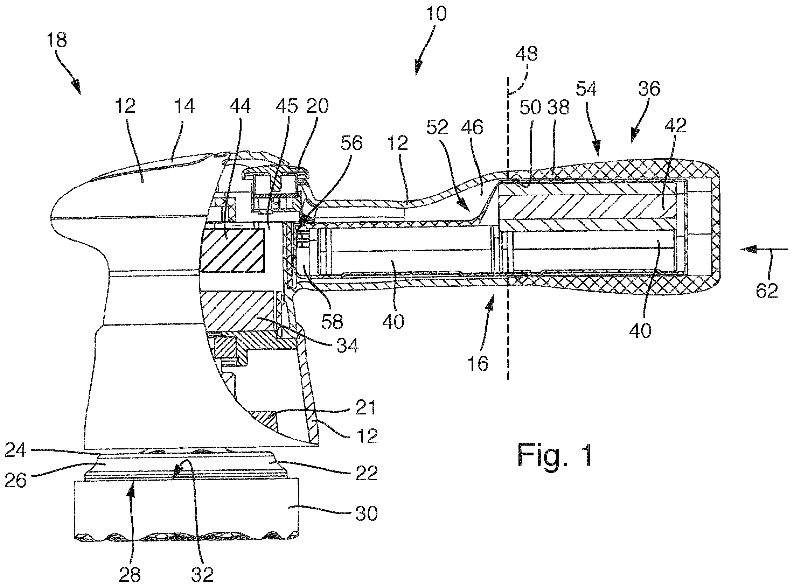

Figure 1 shows an example of an electronic battery-operated power tool, in particular a hand guided electric power tool, for example a polisher. In figure 1 the polisher in its entirety is designated with reference sign 10. The following description is directed to figure 1, that is to a polisher 10, its construction and its functioning. Of course, the invention refers to any other type of electric battery-operated power tool just the same, for example a sander.

The polisher 10 comprises an external housing 12, preferably made of a rigid plastic material. At least part of the housing 12 could be made of any other material than plastic, too, for example metal or a fiber reinforced material. Furthermore, part of the housing 12 could be made of a resilient material, for example a soft plastic material or rubber, or could comprise a coating or an insert 14 made of a resilient material in order to improve the feel and usability of the polisher 10 when gripped by a user. The polisher 10 is provided with a rear part 16 forming a handle allowing a user to hold the polisher 10 with a first hand (e.g. the right hand in right-handed users) and with a front part 18 forming an upper support surface allowing the user to apply pressure onto the polisher 10 from above with his other hand (e.g. the left hand). In particular, at least part of the rear part 16 and/or of the front part 18 could be made of or could comprise the coating or the insert 14 made of a resilient material. Further, the polisher 10 may comprise a turn switch 20 partially protruding from the tool housing 12, for controlling the speed of the polisher 10. The turn switch 20 may be operated by the user with a finger or thumb of the first hand gripping the handle. The turn switch 20 may also serve for turning the polisher 10 on and off. Additionally or alternatively, a separate push switch (not shown) may be provided on the outer surface of the housing 12 for turning the polisher 10 on and off.

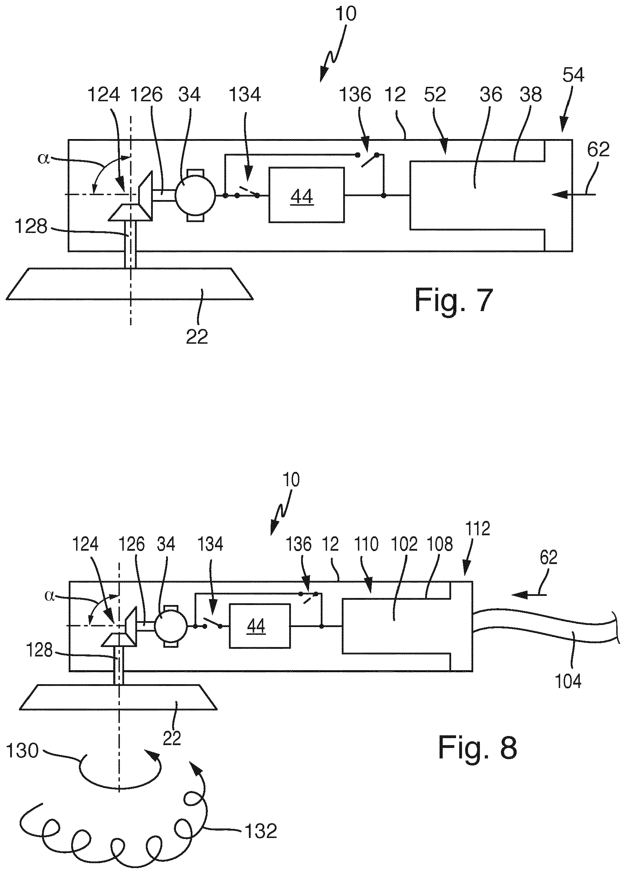

The polisher 10 further comprises a working element 22 protruding from the housing 12 on its lower side. In the case of the polisher 10 or a sander, the working element 22 is preferably embodied as a backing pad, in particular with a circular form. The backing pad 22 comprises a top support layer 24 made of a rigid plastic material and/or metal and/or a fiber reinforced material. The top support layer 24 extends over part of or the entire top surface of the backing pad 22. A connection element (not shown) for direct or indirect attachment of the backing pad 22 to a motor shaft of the polisher 10 may be embedded into the support layer 24. When directly attaching the backing pad 22 to the motor shaft the backing pad 22 performs a purely rotational working movement 130 (see figure 8). If an eccentric element 21 is positioned between the connection element and the motor shaft, the backing pad 22 performs an orbital working movement. In order to perform a random orbital working movement 132, the backing pad 22 is attached to the eccentric element 21 by means of a driving shaft in a freely rotatable manner, with a first rotational axis of the backing pad 22 (and the driving shaft) and a second rotational axis of the eccentric element 21 (and the motor shaft to which the eccentric element 21 is attached) being spaced apart from each other.

The connection element may comprise a recessed element adapted for receiving a protruding element of the driving shaft or of the eccentric element 21 (well-known in the art; see e.g. EP 2 669 044 A1). The recessed element may be embodied as a blind hole provided with an internal thread. To this end, the protruding element of the motor shaft or of the driving shaft is provided with a corresponding external thread for attachment of the backing pad 22 by screwing. If the recessed element has no internal thread, it preferably has no rotational symmetry (see EP 2 669 044 A1). To this end, the protruding element of the motor shaft or of the driving shaft has a corresponding asymmetrical form. The backing pad 22 is attached to the motor shaft or the driving shaft in an axial direction by means of a screw to be passed through a central hole of the backing pad 22 and screwed into a blind hole located at the bottom of the protruding element (of the motor shaft or the driving shaft) and provided with an internal thread. Alternatively, the backing pad is attached to the motor shaft or the driving shaft in an axial direction by means of magnetic force exerted between at least one permanent magnet and at least one ferromagnetic element of the backing pad (or the recessed element, respectively) and the protruding element (see e.g. DE 299 23 017 U1).

The backing pad 22 furthermore comprises a damping layer 26 attached to a bottom surface of the support layer 24. The damping layer 26 is made of a resilient material, for example a soft plastic material or rubber. The damping layer 26 and/or the support layer 24 may be provided with holes and channels for aspiring dust laden air from the working surface during operation of the polisher 10 and rotation of the backing pad 22. The support layer 24 and the damping layer 26 may be obtained by co-moulding of different plastic materials. Alternatively, the layers 24, 26 are glued or welded together after separate manufacturing.

The bottom surface of the damping layer 26 is provided with an attachment layer 28, which may be embodied as a layer of a hook-and-loop fastener (Velcro^{®}). The attachment layer 28 may be glued, welded or moulded to the damping layer 26. A sheet-like polishing member 30 may be releasably attached to the attachment layer 28. The polishing member 30 may be realized as a polishing sponge or foam (like in the shown embodiment), a lambs' or synthetic wool pad, a microfibre pad or the like. A top surface of the polishing member 30 is provided with a corresponding attachment layer 32 adapted for interacting with the attachment layer 28. The attachment layer 32 may also be embodied as a layer of a hook-and-loop fastener (Velcro^{®}). In the case where the power tool 10 is embodied as a sander, a sheet-like sanding member (e.g. a sheet of paper or fabric with abrasive grits attached thereto or the like) could be releasably attached to the attachment layer 28.

The polisher 10 further comprises an electric motor 34 located inside the housing 12. The motor 34 is preferably realized as an electrically commuted brushless motor. The electric motor 34 is operated and controlled through a motor control unit making part of the tool's electronics. The electric motor 34 is directly or indirectly connected to the working element 22 in order to impose a rotational and/or an orbital working movement to the working element 22. In the case of a direct connection of the electric motor 34 to the working element 22, the motor shaft is directly coupled to the working element 22, which rotates at the speed of the motor 34. In the case of an indirect connection of the electric motor 34 to the working element 22, certain components can be functionally located between the motor shaft and the working element 22. The components can comprise a clutch, an overload protection (permitting free rotation of the motor shaft in respect to a driving shaft, to which the working element 22 is attached, in case the force/load applied to the working element 22 during intended use of the power tool 10 exceeds a certain value), a parallel, bevel or planetary gear arrangement, an eccentric element 21 or the like. The gear arrangement could be of the mechanical or of the magnetic type.

As previously mentioned, the electric power tool 10 is battery-operated. To this end, the polisher 10 has two or more separate battery units adapted to provide electric energy to the electric motor 34 for its operation. One of the battery units is an external battery unit 36 provided separately from the rest of the power tool 10 and releasably attachable and electrically connectable to the rest of the power tool 10. The external battery unit 36 is provided with an external housing 38 and at least one battery cell 40 located inside the housing 38. In the shown embodiment, the external battery unit 36 has two battery cells 40 coupled in parallel or in series with each other. Of course, the battery unit 36 could also comprise more than two battery cells 40. Furthermore, the external battery unit 36 may be provided with a control unit 42 inside the housing 38, which may comprise a microprocessor and software for execution by the processor.

The battery cell 40 may be of any type of primary (non-rechargeable, disposable) or secondary (rechargeable) battery cell adapted for the use in the rigid environment of electric power tools. Depending on the type of battery cell 40 (e.g. NiCd; Li-Ion) each battery cell has a voltage between 1.2 V to 3.7 V. The number of battery cells 40 and their electric connection (in series or in parallel) depends on the desired voltage and/or current to be achieved.

The at least one other battery unit comprises one or more internal battery units 44 fixedly located inside the housing 12 of the power tool 10 and electrically connected to the rest of the power tool 10. In the shown embodiment, the power tool 10 comprises only one internal battery unit 44 located above the electric motor 34. Of course, the at least one internal battery unit 44 could also be located at any other place within the tool housing 12, e.g. in the rear part 16 of the housing 12 forming the tool handle, if the at least one battery cell 40 of the external battery unit 36 was smaller than shown in the figures or if the left of the two external battery cells 40 was omitted (and replaced by an internal battery unit 44). In that case the electric motor 34, the internal battery unit 44 and the battery cell 40 of the external battery unit 36 would be located essentially in the same (horizontal) plane.

The internal battery unit 44 is located, fixedly attached in the tool housing 12 and electrically connected to the electronics of the rest of the power tool 10 during production of the power tool 10 and cannot be easily removed thereafter. The polisher 10 according to the invention uses previously unused space 45 in conventional battery-operated power tools for at least one additional internal battery unit 44, which can provide additional electric energy for operating the electric motor 34 for a longer period of time. The internal battery unit 44 may have one or more battery cells of the same of another type than the battery cells 40 of the external battery unit 36. The number of battery cells of the internal battery unit 44 and their electric connection (in series or in parallel) depends on the desired voltage and/or current to be achieved. The battery cells of the internal battery unit 44 are preferably also secondary (rechargeable) battery cells.

It is suggested that the housing 12 comprises a receptacle 46 at the rear part 16 of the power tool 10, the receptacle 46 adapted to receive at least part of the external battery unit 36. In the shown embodiment, the receptacle 46 extends from a rear vertical plane 48 indicating the rear end of the housing 12 towards the front part 18 of the power tool 10. The external battery unit 36 is inserted into the receptacle 46 in an insertion direction 62 running essentially parallel to a longitudinal extension of the receptacle 46 running essentially parallel to the longitudinal extension of the tool housing 12. The longitudinal extension of the tool housing 12 extends essentially perpendicular to the rotational axis of the backing pad 22. The receptacle 46 is accessible from outside through an insertion opening 50, which may lie in the vertical plane 48. In the shown embodiment only a part 52 of the external battery unit 36 is received by the receptacle 46, wherein the remaining part 54 of the battery unit 36 remains outside the receptacle 46 with the housing 38 visible from outside. Of course, it would also be possible to design the form and dimensions of the receptacle 46 and the battery housing 38 such that the entire external battery unit 36 can be inserted into the receptacle 46.

Preferably, the form and the dimensions of the receptacle 46 are adapted to the form and dimensions of the to be inserted part 52 of the external battery unit 36. That part 54 of the external battery unit 36, which is not inserted into the receptacle 46, preferably varies in form and/or dimensions in respect to the to be inserted part 52. It is particularly preferred that the not inserted part 54 or the housing 38 of the not inserted part 54 of the external battery unit 36, respectively, resumes the form and dimensions of the housing 12 of the power tool 10 surrounding the insertion opening 50 of the receptacle 46, thereby providing for a virtually continuous transition between the tool housing 12 and the battery housing 38. The not inserted part 54 of the external battery unit 36 may form part of the rear part 16 of the power tool 10, for example providing for a handle of the tool 10, which can be gripped by the user with his first (e.g. right) hand.

It is conceivable that the receptacle 46 and the external battery unit 36 or its external housing 38, respectively, are provided with corresponding co-operating guiding means, which cooperate with each other for facilitating the introduction of the external battery unit 36 into the insertion opening 50 of the receptacle 46 and/or the insertion and extraction of the external battery unit 36. The receptacle 46 and the external battery unit 36 may also be provided with corresponding coding elements which cooperate with each other in order to permit introduction of the external battery unit 36 into the insertion opening 50 and insertion into the receptacle 46 only in one specific orientation.

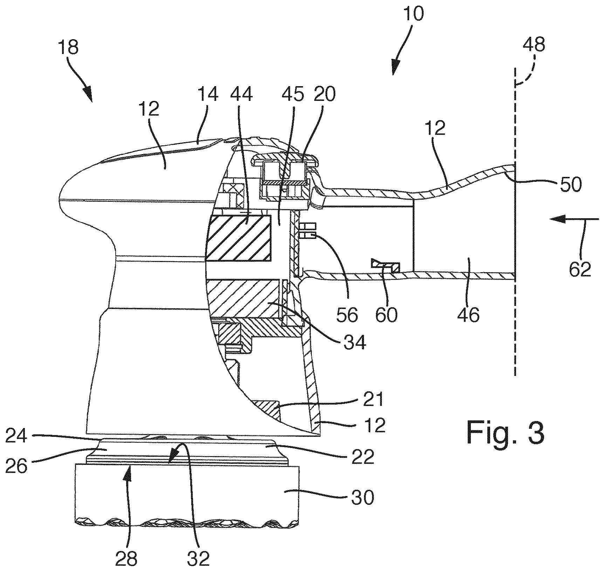

It is further suggested that the receptacle 46 and/or the external battery unit 36 comprise corresponding co-operating fastening elements 60 (see figure 3) for releasably attaching the external battery unit 36 to the rest of the power tool 10 in order to hold and secure the inserted external battery unit 36 in respect to the tool housing 12 and to prevent it from unintentionally falling out of the receptacle 46. In the shown embodiment the fastening elements 60 of the receptacle 46 are embodied as resilient hooks provided on an internal surface of the receptacle 46. In that case the fastening elements of the external battery unit 36 may be embodied as recesses or holes (not shown) provided in an external surface of the battery housing 38. Upon complete insertion of the battery unit 36 into the receptacle 46 the resilient hooks 60 extend into the corresponding recesses or holes.

Obviously, it would also be possible that the battery housing 38 is provided with resilient hooks and the internal surface of the receptacle 46 with corresponding recesses or holes. The resilient hooks of the external battery unit 36 could by located in the battery housing 38 in such a manner that they are accessible and can be operated from outside by the user of the power tool 10 when the to be inserted part 52 of the battery unit 36 is fully inserted into the receptacle 46. In this way the fastening elements can be easily unlocked by the user in order to allow fast and easy removal of the external battery unit 36 from the receptacle 46. Of course, there are many other possibilities how the co-operating fastening elements 60 could be embodied, for example as magnetic elements cooperating with ferromagnetic elements or as components of a bayonet fastening arrangement.

The external battery unit 36 may be electrically contacted with respective electric contact elements 56 of the power tool 10 before, during or after the insertion of the external battery unit 36 into the receptacle 46. To this end, the external battery unit 36 is provided with corresponding electric contact elements 58 adapted for cooperating with the electric contact elements 56 of the receptacle 46 at least during the end of the insertion process thereby electrically contacting the external battery unit 36 with the electronics of the rest of the electric power tool 10. The contact elements 56, 58 of the receptacle 46 and the external battery unit 36 may be embodied as a plug and socket arrangement (as shown in the figures); as resilient electric contacts cooperating with conductive tracks extending on internal side walls of the receptacle 46 along the insertion direction 62; as resilient electric contacts cooperating with electric contacts located at a bottom wall of the receptacle 46; or in any other way.

Preferably, the electric contact elements 56, 58 are adapted to automatically establish an electric contact between the external battery unit 36 and the rest of the power tool 10 upon complete insertion of the to be inserted part 52 of the external battery unit 36 into the receptacle 46. It is further preferred that the corresponding fastening elements 60 of the external battery unit 36 and the receptacle 46 are adapted to automatically co-operate with each other upon complete insertion of the to be inserted part 52 of the external battery unit 36 into the receptacle 46. This has the advantage that the external battery unit 36 can be releasably attached and electrically connected to the rest of the power tool 10 with a single insertion action. No additional action is required for releasably attaching and/or electrically contacting the external battery unit 36 to the rest of the electric power tool 10.

The battery units 36, 44 of the described battery-operated power tool 10 can be interconnected and connected to the electric motor 34 in any desired manner, in particular in parallel or in series. Furthermore, switching devices 134, 136 can be provided between the battery units 36, 44 and/or the electric motor 34, in order to turn on or off a certain battery unit 36; 44 and/or for connecting a certain battery unit 36; 44 with the electric motor 34 (see figures 7 and 8). Each of the switching devices 134, 136 may comprise one or more mechanical, electric or magnetic switches. The switching devices 134, 136 and/or their switches can be embodied as semiconductor devices (e.g. a transistor, thyristor, etc.).

Preferably, after attachment and electric contacting of the external battery unit 36 to the rest of the electric power tool 10 all battery units 36, 44 of the power tool 10 are adapted to contemporarily provide electric energy to the electric motor 34 for its operation. Preferably, all battery units 36, 44 have the same voltage, in particular corresponding to the operation voltage of the electric motor 34. This can be, for example 12 V, 18 V, 24 V or 36 V. Hence, the external and internal battery units 36, 44 of the power tool 10 are preferably connected in parallel to each other so that the available total current for operating the electric motor 34 is a sum total of the currents of each of the battery units 36, 44.

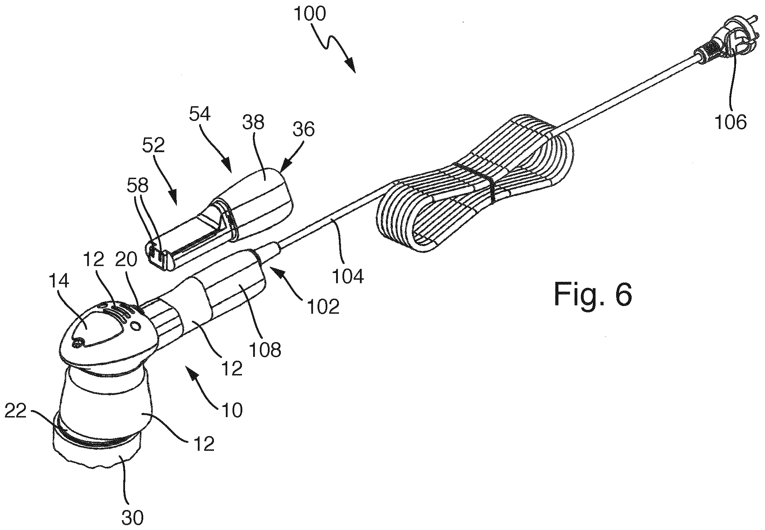

As shown in figure 6, the present invention comprises an electric power tool arrangement 100 comprising an electric power tool 10 of the previously described kind with an external battery unit 36 and at least one internal battery unit 44, wherein the electric power tool arrangement 100 further comprises a voltage converter unit 102 provided separately from the rest of the electric power tool 10 and releasably attachable and electrically connectable to the rest of the electric power tool 10 in place of the external battery unit 36. The voltage converter unit 102 is adapted to be connected to a mains power supply by means of an electric cable 104 and an electric plug 106 at its distal end. The voltage converter unit 102 is adapted to convert a mains voltage (e.g. 230 V, 50 Hz in Europe; 120 V, 60 Hz in Canada, Mexico, the USA and other countries) provided by the mains power supply to a lower voltage (e.g. 12 V, 18 V, 24 V, 36 V) of the at least one internal battery unit 36 or the operation voltage of the electric motor 34.

Hence, the electric power tool 10 cannot only be operated by electric energy originating from the battery units 36, 44 but also by electric energy originating from a mains power supply. During use of the voltage converter unit 102 the removed external battery unit 36 may be recharged, for example in an external battery charger (not shown).

The voltage converter unit 102 is provided with an external housing 108, preferably made of a rigid plastic material, and a number of electronic components located inside the housing 108 for transforming the mains voltage into the voltage of the internal battery unit 36 or of the electric motor 34. A first part 110 of the housing 108 is adapted to be inserted into the receptacle 46 of the power tool 10. The remaining second part 112 of the housing 108 of the voltage converter unit 102 remains outside the receptacle 46 with the housing 108 visible from outside. Of course, it would also be possible to design the form and dimensions of the receptacle 46 and the voltage converter housing 108 such that the entire voltage converter unit 102 (obviously apart from the cable 104 and the plug 106) can be inserted into the receptacle 46.

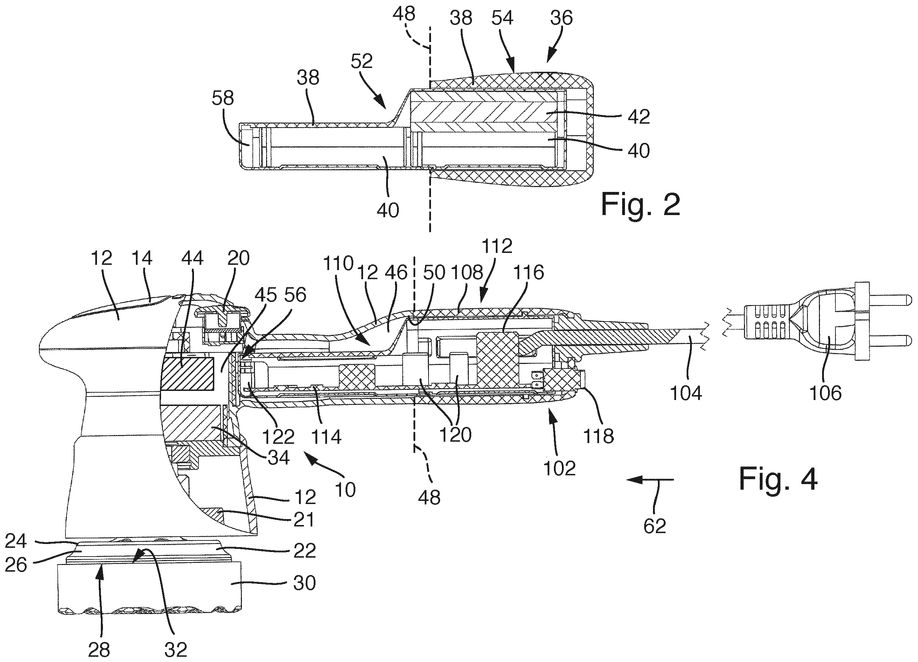

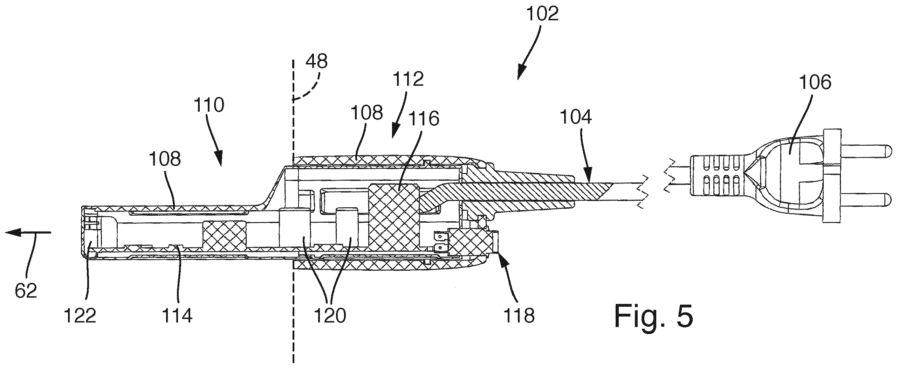

According to figures 4 and 5, the electronic components located inside the converter housing 108 can comprise a printed circuit board (PCB) 114, which has conducting paths (not shown) and numerous other electronic components mounted thereon. The electronic components mounted on the PCB 114 comprise, for example, coils 116 of an electric transformer; a safety fuse 118, which is accessible from outside the housing 108; resistors, capacitors, inductances forming electronic filter elements 120 for rectifying the transformed voltage and/or current and reducing harmonics; and a control unit (not shown), which may comprise a microprocessor and software for execution by the microprocessor. The voltage converter unit 102 is preferably adapted to comply with the ATEX 95 equipment directive 94/9/EC. Hence, the voltage converter unit 102 is a safety isolating transformer, which can be used in potentially explosive atmospheres.

That part 112 of the housing 108 of the voltage converter unit 102, which is not inserted into the receptacle 46, preferably varies in form and/or dimensions in respect to the to be inserted part 110. It is particularly preferred that the not to be inserted part 112 of the voltage converter unit 102 or its housing 108, respectively, resumes the form and dimensions of the tool housing 12 surrounding the insertion opening 50 of the receptacle 46, thereby providing for a virtually continuous transition between the tool housing 12 and the not inserted part 112 of the converter housing 108.

The receptacle 46 and the voltage converter unit 102 may be provided with corresponding guiding means (not shown), which cooperate with each other for facilitating the introduction of the voltage converter unit 102 into the insertion opening 50 of the receptacle 46 and/or the insertion and extraction of the voltage converter unit 102. The receptacle 46 and the voltage converter unit 102 may also be provided with corresponding coding elements (not shown) which cooperate with each other for permitting introduction of the voltage converter unit 102 into the insertion opening 50 and insertion into the receptacle 46 only in a specific orientation. After insertion of the voltage converter unit 102 it is releasably attached to the tool housing 12 and electrically contacted with the rest of the electric power tool 10. The voltage converter unit 102 has contact elements 122 which are automatically brought into contact with the respective contact elements 56 of the rest of the power tool 10 after completely inserting the to be inserted part 110 of the voltage converter unit 102 into the receptacle 46.

The contact elements 56, 122 of the receptacle 46 and the voltage converter unit 102 are embodied as a plug and socket arrangement. Alternatively, the contact elements 56, 122 of the receptacle 46 and the voltage converter unit 102 could be embodied as resilient electric contacts cooperating with conductive tracks extending on side walls of the receptacle 46 along the insertion direction 62; as resilient electric contacts cooperating with electric contacts located at a bottom wall of the receptacle 46; or in any other way.

For holding and securing the voltage converter unit 102 in the receptacle 46, the voltage converter unit 102 can comprise fastening elements corresponding to the fastening elements 60 of the receptacle 46. In the shown embodiment, the fastening elements of the voltage converter unit 102 may be embodied as recesses or holes into which the resilient hooks 60 enter upon complete insertion of the to be inserted part 110 of the voltage converter unit 102 into the receptacle 46. Alternatively, the fastening elements 60 of the receptacle 46 and of the voltage converter unit 102 could be embodied as magnetic elements cooperating with ferromagnetic elements; as components of a bayonet fastening arrangement; or in any other way.

A schematic sectional view of the battery-operated electric power tool 10 is shown in figures 7 and 8, wherein in figure 7 the external battery unit 36 is inserted into the receptacle 46 (first operational state of the power tool 10) and in figure 8 the voltage converter unit 102 is inserted into the receptacle 46 (second operational state of the power tool 10). The power tool 10 is embodied as an angular polisher comprising a bevel gear arrangement 124 functionally located between the electric motor 34 and the backing pad 22. The gear arrangement 124 may be embodied as a mechanical gear arrangement or as a magnetic gear arrangement. The bevel gear arrangement 124 translates the rotation of a motor shaft 126 into the rotation of a driving shaft 128. In the embodiment, an angle α between a rotational axis of the motor shaft 126 and a rotational axis of the driving shaft 128 is 90°. Of course, the angle α could also be larger than 90°, for example between 91 ° and 105°, in particular 98°.

In the shown embodiments, the backing pad 22 is directly attached to the driving shaft 128 and, therefore, performs a purely rotational working movement 130. However, an eccentric element (not shown but well-known in the art) could be located between the bevel gear arrangement 124 and the backing pad 22 resulting in a random-orbital working movement 132 of the backing pad 22 upon operation of the polisher 10. According to yet another embodiment, a coaxial gear arrangement (not shown), e.g. a planetary gear arrangement, could be located between the bevel gear arrangement 124 and the backing pad 22 resulting in a roto-orbital (or gear driven) working movement of the backing pad 22.

According to the invention, after attachment and electric contacting of the voltage converter unit 102 to the rest of the electric power tool 10 the voltage converter unit 102 is adapted to provide electric energy to the electric motor 34 during its operation while the at least one internal battery unit 44 preferably provides no electric energy to the electric motor 34.

According to the invention, after attachment and electric contacting of the voltage converter unit 102 to the rest of the electric power tool 10 the voltage converter unit 102 is adapted to recharge the at least one internal battery unit 44. The internal battery unit 44 is automatically recharged by the voltage converter unit 102 after attachment and electric contacting of the voltage converter unit 102 to the rest of the electric power tool 10, possibly during the intended use of the power tool 10.. It is suggested that the voltage converter unit 102 recharges the internal battery unit 44 when the electric motor 34 is not operated. The recharging process can be controlled by an appropriate battery charging management unit. The battery charging management unit is preferably implemented in the electronics of the power tool 10, comprising for example by a microcontroller with appropriate software being processed by the microcontroller. An overcharging and a possible damage of the internal battery unit 44 can be avoided by means of the battery charging management unit. Furthermore, the recharging process can be controlled such that it is particularly gentle and protective for the internal battery unit 44 thereby assuring a long lasting life of the internal battery unit 44.

The above functionality can be realized, for example, by means of the two switching devices 134, 136. The switching devices 134, 136 may comprise one or more switches. They can be operated mechanically, electrically or magnetically upon insertion of the external battery unit 36 or the voltage converter unit 102 into the receptacle 46. To this end, the external battery unit 36 and/or the voltage converter unit 102 are provided with respective mechanic, electric or magnetic parts for interaction with the switching devices 134, 136 and automatically switching the switching devices 134, 136 upon insertion of the units 36, 102 into the receptacle 46.

After insertion of the external battery unit 36 into the receptacle 46, the first switching device 134 is automatically closed whereas the second switching device 136 is automatically opened (see figure 7). This leads to a connection of the two battery units 36, 44 and the electric motor 34 in parallel (shown only schematically in figure 7). Both batteries 36, 44 contribute electric energy for the operation of the electric motor 34.

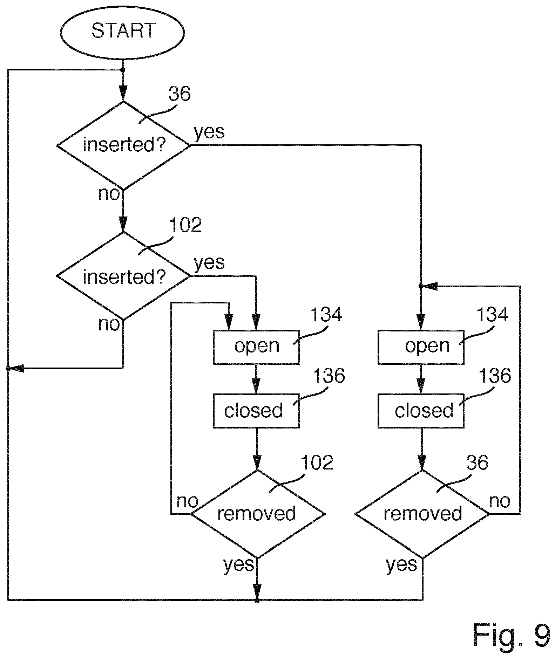

When the external battery 36 is replaced by the voltage converter unit 102, the first switching device 134 is automatically opened whereas the second switching device 136 is automatically closed (see figure 8). This leads to a connection of the voltage converter unit 102, the internal battery unit 44 and the electric motor 34 such that the voltage converter unit 102 recharges the internal battery unit 44 and contemporarily provides electric energy for the operation of the electric motor 34 (shown only schematically in figure 8). With the voltage converter unit 102 inserted into the receptacle 46, the internal battery 44 never contributes electric energy for the operation of the electric motor 34. When the internal battery unit 44 is fully charged, the voltage converter unit 102 only provides electric energy for the operation of the electric motor 34. The internal battery unit 44 is switched into some kind of idle state. The method for controlling operation of the electric power tool arrangement 100 according to the present invention depending on the operational state of the power tool 10 is shown in figure 9.

## Claims

1. Electric power tool arrangement (100) comprising an electric power tool (10) comprising
- a housing (12),
- an electric motor (34) located inside the housing (12),
- a working element (22) protruding from the housing (12),
- wherein the electric motor (34) is connected to the working element (22) in order to impose a rotational and/or an eccentric working movement (130, 132) to the working element (22), and
- two or more battery units (36, 44) adapted to provide electric energy to the electric motor (34) for its operation,
wherein one of the battery units is an external battery unit (36) provided separately from the rest of the electric power tool (10) and releasably attachable and electrically connectable to the rest of the electric power tool (10),
wherein the at least one other battery unit is an internal battery unit (44) fixedly located inside the housing (12) and electrically connected to the rest of the electric power tool (10), and
wherein the electric power tool arrangement (100) further comprises a voltage converter unit (102) provided separately from the rest of the electric power tool (10) and releasably attachable and electrically connectable to the rest of the electric power tool (10) in place of the external battery unit (36), the voltage converter unit (102) being adapted to be connected to a mains power supply and to convert a mains voltage provided by the mains power supply to a voltage of the at least one internal battery unit (44),
wherein
after attachment and electric contacting of the voltage converter unit (102) to the rest of the electric power tool (10) the voltage converter unit (102) is adapted to recharge the at least one internal battery unit (44),
**characterised in that**
after attachment and electric contacting of the voltage converter unit (102) to the rest of the electric power tool (10) the voltage converter unit (102) is adapted to provide electric energy to the electric motor (34) during its operation. 11

2. Electric power tool arrangement (100) according to claim 1, wherein the external battery unit (36) and the internal battery unit (44) are located in the same horizontal plane extending parallel to a longitudinal extension of the housing (12).

3. Electric power tool arrangement (100) according to claim 1, wherein the external battery unit (36), the internal battery unit (44) and the electric motor (34) are located in the same horizontal plane extending parallel to a longitudinal extension of the housing (12).

4. Electric power tool arrangement (100) according to one of the preceding claims, wherein the housing (12) comprises a receptacle (46) accessible from outside and adapted to receive at least part (52) of the external battery unit (36) and of the voltage converter unit (102).

5. Electric power tool arrangement (100) according to claim 4, wherein the receptacle (46) comprises fastening means (60) for releasably attaching the external battery unit (36) or the voltage converter unit (102) to the rest of the power tool (10) after insertion of at least part (52) of the external battery unit (36) or of at least part (110) of the voltage converter unit (102) into the receptacle (46), and wherein the receptacle (46) further comprises electric contact elements (56) for electrically contacting the external battery unit (36) or the voltage converter unit (102) to the rest of the power tool (10) after insertion of at least part (52) of the external battery unit (36) or of at least part (110) of the voltage converter unit (102) into the receptacle (46), wherein the electric contact elements (56) are preferably adapted to automatically establish an electric contact between the external battery unit (36) or the voltage converter unit (102) and the rest of the power tool (10) upon complete insertion of at least part (52) of the external battery unit (36) or of at least part (110) of the voltage converter unit (102) into the receptacle (46).

6. Electric power tool arrangement (100) according to one of the preceding claims, wherein after attachment and electric contacting of the external battery unit (36) to the rest of the electric power tool (10) all battery units (36, 44) are adapted to contemporarily provide electric energy to the electric motor (34) for its operation.

7. Electric power tool arrangement (100) according to one of the preceding claims, wherein all battery units (36, 44) have the same voltage, preferably corresponding to the operation voltage of the electric motor (34).

8. Electric power tool arrangement (100) according to one of the preceding claims, wherein the connection between the electric motor (34) and the working element (22) is mechanical and/or magnetic.

9. Electric power tool arrangement (100) according to claim 8, wherein a mechanical gear arrangement (124) and/or a magnetic gear arrangement (124) is functionally located in the connection between the electric motor (34) and the working element (22).

10. Electric power tool arrangement (100) according to one of the preceding claims, wherein after attachment and electric contacting of the voltage converter unit (102) to the rest of the electric power tool (10) the voltage converter unit (102) is adapted to exclusively provide electric energy to the electric motor (34) for its operation while the at least one internal battery unit (44) provides no electric energy to the electric motor (34).

11. Electric power tool arrangement (100) according to one of the preceding claims, wherein the electric power tool (10) is provided with switching devices (134, 136) for automatically realizing the claimed functionality and the respective flow of current between the electric motor (34), the internal battery unit (44) and the voltage converter unit (102) or the external battery unit (36) upon insertion of at least part (110) of the voltage converter unit (102) or of at least part (52) of the external battery unit (36) into the receptacle (46).

12. Electric power tool arrangement (100) according to claim 11, wherein the switching devices (134, 136) are controlled mechanically, electrically, or magnetically and wherein the voltage converter unit (102) and the external battery unit (36) comprise respective mechanic, electric or magnetic elements for controlling the switching devices (134, 136) upon insertion of at least part (110) of the voltage converter unit (102) or of at least part (52) of the external battery unit (36) into the receptacle (46).

## Patentansprüche

1. Elektrowerkzeuganordnung (100) umfassend ein Elektrowerkzeug (10) mit
- einem Gehäuse (12),
- einem Elektromotor (34), der im Inneren des Gehäuses (12) angeordnet ist,
- ein Arbeitselement (22), das aus dem Gehäuse (12) herausragt,
- wobei der Elektromotor (34) mit dem Arbeitselement (22) verbunden ist, um dem Arbeitselement (22) eine rotierende und/oder exzentrische Arbeitsbewegung (130, 132) aufzuerlegen, und
- zwei oder mehr Batterieeinheiten (36, 44), die ausgebildet sind, dem Elektromotor (34) für seinen Betrieb elektrische Energie zuzuführen,
wobei eine der Batterieeinheiten eine externe Batterieeinheit (36) ist, die getrennt von dem Rest des Elektrowerkzeugs (10) vorgesehen und an dem Rest des Elektrowerkzeugs (10) lösbar befestigbar und elektrisch anschließbar ist,
wobei die mindestens eine andere Batterieeinheit eine interne Batterieeinheit (44) ist, die fest innerhalb des Gehäuses (12) angeordnet und an den Rest des Elektrowerkzeugs (10) elektrisch angeschlossen ist, und
wobei die Elektrowerkzeuganordnung (100) ferner eine Spannungswandlereinheit (102) umfasst, die getrennt von dem Rest des Elektrowerkzeugs (10) vorgesehen und anstelle der externen Batterieeinheit (36) an dem Rest des Elektrowerkzeugs (10) lösbar befestigbar und elektrisch anschließbar ist, wobei die Spannungswandlereinheit (102) ausgebildet ist, an eine Netzspannungsversorgung angeschlossen zu werden und eine von der Netzspannungsversorgung bereitgestellte Netzspannung in eine Spannung der mindestens einen internen Batterieeinheit (44) umzuwandeln,
wobei die Spannungswandlereinheit (102) nach dem Befestigen und dem elektrischen Kontaktieren der Spannungswandlereinheit (102) an dem Rest des Elektrowerkzeugs (10) ausgebildet ist, die mindestens eine interne Batterieeinheit (44) aufzuladen,
**dadurch gekennzeichnet, dass**
die Spannungswandlereinheit (102) nach dem Befestigen und dem elektrischen Kontaktieren der Spannungswandlereinheit (102) an dem Rest des Elektrowerkzeugs (10) ausgebildet ist, dem Elektromotor (34) während seines Betriebs elektrische Energie zuzuführen.

2. Elektrowerkzeuganordnung (100) nach Anspruch 1, wobei die externe Batterieeinheit (36) und die interne Batterieeinheit (44) in der gleichen horizontalen Ebene angeordnet sind, die sich parallel zu einer Längserstreckung des Gehäuses (12) erstreckt.

3. Elektrowerkzeuganordnung (100) nach Anspruch 1, wobei die externe Batterieeinheit (36), die interne Batterieeinheit (44) und der Elektromotor (34) in der gleichen horizontalen Ebene angeordnet sind, die sich parallel zu einer Längserstreckung des Gehäuses (12) erstreckt.

4. Elektrowerkzeuganordnung (100) nach einem der vorhergehenden Ansprüche, wobei das Gehäuse (12) eine von außen zugängliche Aufnahme (46) aufweist, die ausgebildet ist, zumindest einen Teil (52) der externen Batterieeinheit (36) und der Spannungswandlereinheit (102) aufzunehmen.

5. Elektrowerkzeuganordnung (100) nach Anspruch 4, wobei die Aufnahme (46) Befestigungsmittel (60) zum lösbaren Befestigen der externen Batterieeinheit (36) oder der Spannungswandlereinheit (102) an dem Rest des Elektrowerkzeugs (10) nach dem Einsetzen von zumindest einem Teil (52) der externen Batterieeinheit (36) oder von zumindest einem Teil (110) der Spannungswandlereinheit (102) in die Aufnahme (46) umfasst, und wobei die Aufnahme (46) ferner elektrische Kontaktelemente (56) zum elektrischen Anschluss der externen Batterieeinheit (36) oder der Spannungswandlereinheit (102) an dem Rest des Elektrowerkzeugs (10) nach dem Einsetzen von zumindest einem Teil (52) der externen Batterieeinheit (36) oder von zumindest einem Teil (110) der Spannungswandlereinheit (102) in die Aufnahme (46) umfasst, wobei die elektrischen Kontaktelemente (56) vorzugsweise ausgebildet sind, nach dem vollständigen Einsetzen zumindest eines Teils (52) der externen Batterieeinheit (36) oder zumindest eines Teils (110) der Spannungswandlereinheit (102) in die Aufnahme (46) automatisch einen elektrischen Kontakt zwischen der externen Batterieeinheit (36) oder der Spannungswandlereinheit (102) und dem Rest des Elektrowerkzeugs (10) herzustellen.

6. Elektrowerkzeuganordnung (100) nach einem der vorhergehenden Ansprüche, wobei nach dem Befestigen und dem elektrischen Anschluss der externen Batterieeinheit (36) an dem Rest des Elektrowerkzeugs (10) alle Batterieeinheiten (36, 44) ausgebildet sind, dem Elektromotor (34) gleichzeitig elektrische Energie für seinen Betrieb zuzuführen.

7. Elektrowerkzeuganordnung (100) nach einem der vorhergehenden Ansprüche, wobei alle Batterieeinheiten (36, 44) die gleiche Spannung aufweisen, die vorzugsweise der Betriebsspannung des Elektromotors (34) entspricht.

8. Elektrowerkzeuganordnung (100) nach einem der vorangehenden Ansprüche, wobei die Verbindung zwischen dem Elektromotor (34) und dem Arbeitselement (22) mechanisch und/oder magnetisch ist.

9. Elektrowerkzeuganordnung (100) nach Anspruch 8, wobei in der Verbindung zwischen dem Elektromotor (34) und dem Arbeitselement (22) eine mechanische Getriebeanordnung (124) und/oder eine magnetische Getriebeanordnung (124) funktionell angeordnet ist.

10. Elektrowerkzeuganordnung (100) nach einem der vorhergehenden Ansprüche, wobei nach dem Befestigen und dem elektrischen Anschluss an dem Rest des Elektrowerkzeugs (10) die Spannungswandlereinheit (102) ausgebildet ist, ausschließlich dem Elektromotor (34) elektrische Energie für seinen Betrieb zur Verfügung zu stellen, während die mindestens eine interne Batterieeinheit (44) dem Elektromotor (34) keine elektrische Energie zur Verfügung stellt.

11. Elektrowerkzeuganordnung (100) nach einem der vorhergehenden Ansprüche, wobei das Elektrowerkzeug (10) mit Schaltvorrichtungen (134, 136) zur automatischen Realisierung der beanspruchten Funktionalität und des entsprechenden Stromflusses zwischen dem Elektromotor (34), der internen Batterieeinheit (44) und der Spannungswandlereinheit (102) oder der externen Batterieeinheit (36) nach dem Einsetzen von zumindest einem Teil (110) der Spannungswandlereinheit (102) oder von zumindest einem Teil (52) der externen Batterieeinheit (36) in die Aufnahme (46) versehen ist.

12. Elektrowerkzeuganordnung (100) nach Anspruch 11, wobei die Schaltvorrichtungen (134, 136) mechanisch, elektrisch oder magnetisch gesteuert werden und wobei die Spannungswandlereinheit (102) und die externe Batterieeinheit (36) jeweils mechanische, elektrische oder magnetische Elemente zur Steuerung der Schaltvorrichtungen (134, 136) nach dem Einsetzen von zumindest einem Teil (110) der Spannungswandlereinheit (102) oder von zumindest einem Teil (52) der externen Batterieeinheit (36) in die Aufnahme (46) aufweisen.

## Revendications

1. Ensemble d'outil électrique (100) comprenant un outil électrique (10) comprenant
- un boîtier (12),
- un moteur électrique (34) situé à l'intérieur du boîtier (12),
- un élément de travail (22) faisant saillie du boîtier (12),
- dans lequel le moteur électrique (34) est connecté à l'élément de travail (22) afin d'imposer un mouvement de travail rotatif et/ou excentrique (130, 132) à l'élément de travail (22), et
- deux ou plusieurs unités de batterie (36, 44) adaptées pour fournir de l'énergie électrique au moteur électrique (34) pour son fonctionnement,
dans lequel l'une des unités de batterie est une unité de batterie externe (36) fournie séparément du reste de l'outil électrique (10) et pouvant être fixée de manière amovible et connectée électriquement au reste de l'outil électrique (10),
dans lequel au moins une autre unité de batterie est une unité de batterie interne (44) située de manière fixe à l'intérieur du boîtier (12) et connectée électriquement au reste de l'outil électrique (10), et
dans lequel l'ensemble d'outils électriques (100) comprend en outre une unité de conversion de tension (102) fournie séparément du reste de l'outil électrique (10) et pouvant être fixée de manière amovible et connectée électriquement au reste de l'outil électrique (10) à la place de l'unité de batterie externe (36), l'unité de conversion de tension (102) étant adaptée pour être connectée à une alimentation en tension secteur et pour convertir une tension secteur fournie par l'alimentation en tension secteur en une tension de l'au moins une unité de batterie interne (44),
dans lequel, après fixation et mise en contact électrique de l'unité de conversion de tension (102) avec le reste de l'outil électrique (10), l'unité de conversion de tension (102) est adaptée pour recharger l'au moins une unité de batterie interne (44),
**caractérisé par le fait que**
après fixation et mise en contact électrique de l'unité de conversion de tension (102) avec le reste de l'outil électrique (10), l'unité de conversion de tension (102) est adaptée pour fournir de l'énergie électrique au moteur électrique (34) pendant son fonctionnement.

2. Ensemble d'outil électrique (100) selon la revendication 1, dans lequel l'unité de batterie externe (36) et l'unité de batterie interne (44) sont situées dans le même plan horizontal s'étendant parallèlement à une extension longitudinale du boîtier (12).

3. Ensemble d'outil électrique (100) selon la revendication 1, dans lequel l'unité de batterie externe (36), l'unité de batterie interne (44) et le moteur électrique (34) sont situés dans le même plan horizontal s'étendant parallèlement à une extension longitudinale du boîtier (12).

4. Ensemble d'outil électrique (100) selon l'une des revendications précédentes, dans lequel le boîtier (12) comprend un réceptacle (46) accessible de l'extérieur et adapté pour recevoir au moins une partie (52) de l'unité de batterie externe (36) et de l'unité de conversion de tension (102).

5. Ensemble d'outil électrique (100) selon la revendication 4, dans lequel le réceptacle (46) comprend des moyens de fixation (60) pour fixer de manière amovible l'unité de batterie externe (36) ou l'unité de conversion de tension (102) au reste de l'outil électrique (10) après l'insertion d'au moins une partie (52) de l'unité de batterie externe (36) ou d'au moins une partie (110) de l'unité de conversion de tension (102) dans le réceptacle (46), et dans lequel le réceptacle (46) comprend en outre des éléments de contact électrique (56) pour mettre en contact électriquement l'unité de batterie externe (36) ou l'unité de conversion de tension (102) au reste de l'outil électrique (10) après l'insertion d'au moins une partie (52) de l'unité de batterie externe (36) ou d'au moins une partie (110) de l'unité de conversion de tension (102) dans le réceptacle (46), dans lequel les éléments de contact électrique (56) sont de préférence adaptés pour établir automatiquement un contact électrique entre l'unité de batterie externe (36) ou l'unité de conversion de tension (102) et le reste de l'outil électrique (10) après l'insertion complète d'au moins une partie (52) de l'unité de batterie externe (36) ou d'au moins une partie (110) de l'unité de conversion de tension (102) dans le réceptacle (46).

6. Ensemble d'outil électrique (100) selon l'une des revendications précédentes, dans lequel, après la fixation et la mise en contact électrique de l'unité de batterie externe (36) au reste de l'outil électrique (10), toutes les unités de batterie (36, 44) sont adaptées pour fournir simultanément de l'énergie électrique au moteur électrique (34) pour son fonctionnement.

7. Ensemble d'outil électrique (100) selon l'une des revendications précédentes, dans lequel toutes les unités de batterie (36, 44) ont la même tension, correspondant de préférence à la tension de fonctionnement du moteur électrique (34).

8. Ensemble d'outil électrique (100) selon l'une des revendications précédentes, dans lequel la connexion entre le moteur électrique (34) et l'élément de travail (22) est mécanique et/ou magnétique.

9. Ensemble d'outil électrique (100) selon la revendication 8, dans lequel un dispositif d'engrenage mécanique (124) et/ou un dispositif d'engrenage magnétique (124) est situé fonctionnellement dans la connexion entre le moteur électrique (34) et l'élément de travail (22).

10. Ensemble d'outil électrique (100) selon l'une des revendications précédentes, dans lequel, après la fixation et la mise en contact électrique de l'unité de conversion de tension (102) au reste de l'outil électrique (10), l'unité de conversion de tension (102) est adaptée pour fournir exclusivement de l'énergie électrique au moteur électrique (34) pour son fonctionnement, tandis que l'au moins une unité de batterie interne (44) ne fournit pas d'énergie électrique au moteur électrique (34).

11. Ensemble d'outil électrique (100) selon l'une des revendications précédentes, dans lequel l'outil électrique (10) est équipé de dispositifs de commutation (134, 136) pour réaliser automatiquement la fonctionnalité revendiquée et le flux de courant respectif entre le moteur électrique (34), l'unité de batterie interne (44) et l'unité de conversion de tension (102) ou l'unité de batterie externe (36) lors de l'insertion d'au moins une partie (110) de l'unité de conversion de tension (102) ou d'au moins une partie (52) de l'unité de batterie externe (36) dans le réceptacle (46).

12. Ensemble d'outil électrique (100) selon la revendication 11, dans lequel les dispositifs de commutation (1 34, 136) sont commandés mécaniquement, électriquement ou magnétiquement et dans lequel l'unité de conversion de tension (102) et l'unité de batterie externe (36) comprennent des éléments mécaniques, électriques ou magnétiques respectifs pour commander les dispositifs de commutation (134, 136) lors de l'insertion d'au moins une partie (110) de l'unité de conversion de tension (102) ou d'au moins une partie (52) de l'unité de batterie externe (36) dans le réceptacle (46).
